# FASCICULE DE BREVET EUROPEEN

(11) **EP 0 857 644 B1**
(45) Date de publication et mention de la délivrance du brevet: **26.11.2003**
(21) Numéro de dépôt: 98830053.9
(22) Date de dépôt: 09.02.1998
(51) Int. Cl.: B62L 1/00, B62L 3/02, F16D 55/227, F16D 55/2265

(54) **Frein à disque perfectionné**
Scheibenbremse
Disc brake

(30) Priorité: 11.02.1997 IT FI970023 U
(43) Date de publication de la demande: 12.08.1998
(73) Titulaire: Formula S.r.l., 59100 Prato (IT)
(72) Inventeur: Becocci, Andrea Fiorenzo, 59100 Prato (IT)
(74) Mandataire: Martini, Lazzaro

(56) Documents cités:
- EP-A- 0 068 613
- FR-A- 2 693 245
- US-A- 3 765 511
- US-A- 4 537 288

## Description

La présente invention a pour objet un frein à disque perfectionné, apte spécialement pour cycles et motocycles.

Il est connu que les freins à disque pour véhicules comprennent, essentiellement, un disque solidaire au moyeu d'une roue, auquel sont associées deux garnitures ou "plaquettes" en matériel de frottement, comme par exemple ferodo, positionnées de côtés opposés au disque et activables au moyen de pistons hidrauliques coaxiaux correspondants, lesquels sont opportunement asservis à un circuit hydraulique de commande, de manière à obtenir, en position de freinage, le serrage du disque par les plaquettes poussées au même temps par les pistons respectifs et ainsi la dégradation de l'énergie cinétique du véhicule par effet du frottement exercé par les plaquettes sur le disque de chaque roue.

Il est aussi connu que dans les freins à disque conventionnels les précitées plaquettes sont en contact permanent avec la surface du disque, c'est-à-dire aussi dans la condition de pistons désactivés. Ceci comporte une constante et non désirée dégradation énergetique en position de marche du véhicule, et détermine une réduction de rendement mécanique du véhicule et est autrement nuisible dans le cas de cycles, particulièrement ceux pour la competition, puisque un éffort supplémentaire est requis de la part du cycliste pour surmonter la resistance ainsi offerte à la rotation de la roue.

Le but principal de la présente invention est celui de remédier aux inconvenients précités et de proposer un dispositif de fabrication relativement simple, économique et fiable.

A ce résultat on est parvenu conformément à l'invention en adoptant le concept de réaliser un dispositif ayant les caractéristiques décrites dans la revendication 1. D'autres caractéristiques font l'objet des revendications dépendantes.

Ces avantages et caractéristiques de l'invention ainsi que d'autres seront plus et mieux compris de chaque homme du métier à la lumière de la description qui va suivre et à l'aide du dessin annexé donné à titre d'exemplification pratique de l'invention, mais à ne pas considérer dans le sens limitatif, sur lequel la seule figure représente une vue en coupe verticale d'un frein à disque conformément à l'invention.

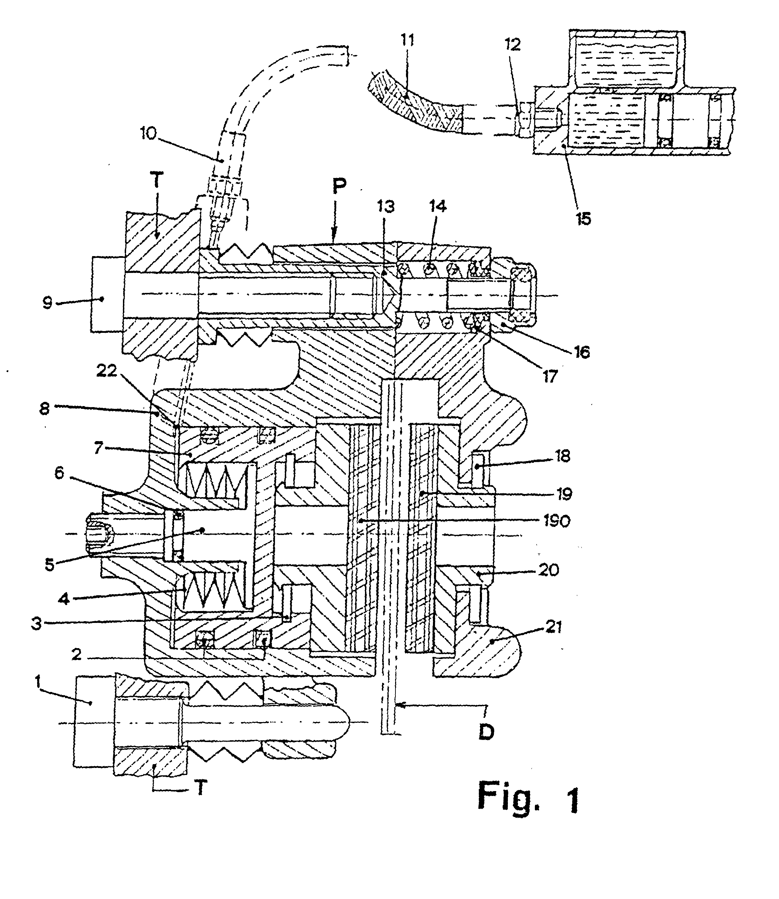

Réduit à sa structure essentielle et en reférence à la figure 1 du dessin annexé, un frein à disque perfectionné conformément à l'invention comprend une pince avec deux éléments (8,21) positionnés de côtés opposés par rapport à un disque (D) solidaire au moyeu d'un roue - pour simplification non représentée dans le dessin - et à chacun desquels est associée une plaquette flottante en matériel de frottage (190,19) parallèle du disque (D), de manière que chaque plaquelle est tournée vers une surface correspondante du disque (D) pour résulter en contact en position de freinage et à une distance prédéterminée en position de marche. La pince est rendue solidaire au chassis (T) du véhicule au moyen de vis (9,1) qui dans la forme de réalisation représentée dans la Fig. 1 sont prévues en correspondance des attaches respectivement primaire et secondaire de la pince. Pour régler la distance de l'élément (21), c'est-à-dire de la plaquette correspondante (19), du disque (D), on utilise un pivot (13) porté par le chassis (T) et sur lequel est monté coulissant l'attache primaire (P) qui est mantenu en place par un ressort (14) interposé entre les deux éléments (8,21) de la pince, et plus particulièrement placée à l'intérieur de l'élément (21) et mantenue en guide par le pivot (13) et coopérant avec un pivot respectif avec un écrou de réglage (16) placé du côté opposé au pivot (13), ledit pivot (13) et ledit ressort (14) étant orientés parallèlement à l'axe de rotation du disque (D). Agissant sur l'écru (16) on régle la précharge du ressort (14) et la position de l'élément (21) de la pince avec la plaquette (19), par rapport au disque (D). Avec (17) est indiqué une douille d'appui pour la base du ressort (14)

Pour rendre flottante la plaquette (19), celle-ci est supportée par une plaque avec appendice (20) logée avec jeu dans un trou correspondant de l'élément précité (21) et tenue dans le siège au moyen d'un seeger (18). La plaquelle (190) de l'autre élément (8) de la pince est asservie à un pyston hydraulique (7) à axe parallèle à celui de rotation du disque (D), dont l'activation est commandée par une pompe (15), et lequel est monté coulissant dans un siège correspondant de l'élément (8) à l'aide de deux anneaux de tenue (2). Audit piston (7) est associé un ressort de contraste correspondant (4) avec un pivot coassial (5) pour régler la distance de la pastille (190) du disque (D). Avec (11) est indiqué un tuyau d'envoi du fluide de la pompe (15) à l'élément (8) de la pince à laquelle sont associés une attache (12) en correspondance de la pompe (15) et une attache (10) en correspondance de l'élément (8).

Le fonctionnement du dispositif décrit est le suivant.
Lorsque la pompe (15), actionné par le cycliste pour commander le freinage, envoie le fluide en pression au piston (7) - la section d'entrée du fluide dans l'élément (8) de la pince est indiquée avec (22) dans la Fig. 1 - le fluide se meut par traslation selon la direction de son propre axe longitudinal en provoquant ainsi le mouvement de la plaquette respective (190) vers le disque (D). lorsque on arrive à la condition de contact complet de la plaquette (190) avec le disque (D) et lorsque la force éxercée sur celui-ci est suffisante à surmonter la resistance du ressort (14), par un effet de réaction celle-ci provoque l'approchement de l'élément (21) avec la plaquette (19) au disque (D), jusqu'au contact complet et à la compression de la pastille sur le disque. Commence ainsi l'action freinante éxercée par le dispostif sur la roue. Lorsque la pression hydraulique cesse, le piston (7) est ramené dans sa position initiale, de détachement de la plaquette (190) du disque (D), pour l'action du ressort (4), ce-ci permet au ressort (14) de reprendre la configuration de départ et ainsi de libérer le disque (D) aussi de l'action de la plaquette (19), laquelle comme la plaquette (190) se replace dans la position de départ, par effet du mouvement correspondant à l'arrière de l'élément (21).

La possibilité de régler dans une pince flottante les positions des deux plaquettes (19,190) une par une permet de prédisposer le frein dans la configuration plus apte aux exigeances spécifiques de chaque cycliste, comme par exemple le temps de réponse requis en relation aux conditions de marche ou de compétition prévues ou rélevés, à la nature du matériel des plaquettes (19,190) et au dégré d'usage de chaque plaquette.

## Revendications

1. Frein à disque comprenant un étrier constitué de deux éléments (8,21) positionnés de chaque côté d'un disque (D) solidaire du moyeu d'une roue et à chacun desquels est associée une plaquette flottante en matériel de frottement (190,19) parallèle au disque, de manière que chaque plaquette est tournée vers une surface correspondante du disque pour être en contact avec lui en position de freinage et à une distance prédéterminée de lui en position de marche,
l'étrier étant fixé à un châssis fixe (T) au moyen de fixations (1, 9) constituées en pivots (13), le premier des deux éléments (8) logeant un piston hydraulique actionnable par une pompe et sur lequel est montée une plaquette, ce même élément étant situé du côté du châssis et coulissant sur les pivôts,
**caractérisé en ce que**
l'un des pivôts (13) est fermé par un écrou (16) permettant l'assemblage du second élément (21) de l'étrier avec le premier élément (8), un ressort (14) étant interposé entre un épaulement du pivôt et l'écrou, dans une ouverture traversant le second élément (21), ledit pivôt et ledit ressort étant orientés parallèlement à l'axe de rotation du disque, de manière qu'en agissant sur l'écrou on régle la précharge du ressort ainsi que la position par rapport au disque de la plaquette portée par le deuxième élément de l'étrier et **en ce que** le piston hydraulique est asservi à un ressort de rappel (4).

2. Frein à disque selon la revendication 1 **caractérisé en ce que** au ressort (4) de contraste dudit piston (7) est associé un pivot coaxial (5) pour régler la distance de la plaquette respective (190) au disque (D).

3. Frein à disque selon la revendication 1 **caractérisé en ce que** ledit ressort (14) est placé interieurement à l'élément (21) et est gardé en place par le pivot (13).

## Claims

1. Disc brake comprising a caliper made by two elements (8,21) positioned on opposed sides with respect to a disc (D) solid with the hub of a wheel and to each of which is associated a floating pad of friction material (190, 19) parallel to the disc, so that each pad faces a corresponding surface of the disc in order to result in contact therewith under braking conditions and spaced therefrom under running conditions, the caliper being fixed to the chassis (T) through fixing means (1,9) making pins (13), the first of the two elements (8) defining a seat for a hydraulic piston operable by a pump and on which it is mounted a pad, the same element being positioned on a side of the chassis and sliding on the pins, **characterized in that** one of the pins (13) is mainteined by a nut (16) which permits to assemble the second element (21) of the caliper with the first element (8), a spring (14) being interposed between a seat of the pin and the nut, in an opening through the second element (21), said pin and said spring being oriented parallel to the axis of rotation of the disc, so that by acting on the nut it is adjusted the preloading of the spring and the position with respect to the disc of the pad supported by the second element of the caliper and **in that** the hydraulic piston is associated with a recall spring (4).

2. Disc brake according to claim 1, **characterized in that** the spring (4) for counteracting said piston (7) is associated to a coaxial pin (5) for adjusting the distance of the respective pad (190) from the disc (D).

3. Disc brake according to claim 1, **characterized in that** the said spring (14) is positioned within the element (21) and guided by the pin (13).

## Patentansprüche

1. Scheibenbremse, die einen Bremssattel umfaßt, der von zwei Elementen (8, 21) gebildet wird, die jeweils auf einer der Seiten einer Scheibe (D) angeordnet sind, die fest mit der Nabe eines Rades verbunden ist, und jeder von denen eine schwimmende Platte (190, 19) aus Reibungsmaterial zugeordnet ist, die parallel zur Scheibe verläuft, so daß jede Platte einer entsprechenden Oberfläche der Scheibe zugewendet ist, um mit dieser in der Bremsstellung in Berührung zu stehen und von dieser einen vorbestimmten Abstand in der Fahrposition einzunehmen, wobei der Bremssattel an einem festen Gehäuse (T) mit Hilfe von Befestigungsmitteln (1, 9) befestigt ist, die von Schwenkzapfen (13) gebildet werden, wobei das erste (8) der beiden Elemente einen hydraulischen Kolben aufnimmt, der durch eine Pumpe betätigbar ist und an dem eine Platte montiert ist, wobei dieses Element neben dem Gehäuse angeordnet ist und auf den Schwenkzapfen gleitet,
**dadurch gekennzeichnet,**
**daß** der eine der beiden Schwenkzapfen (13) durch eine Schraube (16) verschlossen ist, die den Zusammenbau des zweiten Elementes (21) des Bremssattels mit dem ersten Element (8) ermöglicht, wobei eine Feder (14) zwischen einer Schulter des Schwenkzapfens und der Schraube in einer Öffnung angeordnet ist, die sich durch das zweite Element (21) hindurch erstreckt, wobei der Schwenkzapfen und die Feder parallel zur Rotationsachse der Scheibe ausgerichtet sind, so daß man dadurch, daß man die Schraube betätigt, die Vorspannung der Feder sowie die Position der vom zweiten Element des Bremssattels getragenen Platte bezüglich der Scheibe einstellt, und daß der hydraulische Kolben der Wirkung einer Rückholfeder (4) unterworfen ist.

2. Scheibenbremse nach Anspruch 1,
**dadurch gekennzeichnet,**
**daß** der Rückholfeder (4) des Kolbens (7) ein koaxialer Schwenkzapfen (5) zugeordnet ist, um den Abstand der betreffenden Platte (190) von der Scheibe (D) einzustellen.

3. Scheibenbremse nach Anspruch 1,
**dadurch gekennzeichnet ,**
**daß** die Feder (14) im Inneren des Elementes (21) angeordnet und an ihrem Ort durch den Schwenkzapfen (13) geführt ist.
